# EUROPÄISCHE PATENTSCHRIFT

(11) **EP 3 401 280 B1**
(45) Veröffentlichungstag und Bekanntmachung des Hinweises auf die Patenterteilung: **22.12.2021**
(21) Anmeldenummer: 17170711.0
(22) Anmeldetag: 11.05.2017
(51) Int. Cl.: C01C 1/04, C01B 3/02, C01B 3/50

(54) **VERFAHREN ZUR HERSTELLUNG VON AMMONIAK**
METHOD FOR MANUFACTURING AMMONIUM
PROCÉDÉ DE FABRICATION D'AMMONIAC

(43) Veröffentlichungstag der Anmeldung: 14.11.2018
(73) Patentinhaber: GasConTec GmbH, 61348 Bad Homburg v. d. Höhe (DE)
(72) Erfinder: Koss, Ulrich, 61348 Bad Homburg vor der Höhe (DE); Müller, Dierk, 61184 Karben (DE); Wagner, Ulrich, 06406 Bernburg (DE)
(74) Vertreter: Patentanwälte Bauer Vorberg Kayser

(56) Entgegenhaltungen:
- DE-A1- 3 308 305
- DE-A1- 4 334 257
- US-A- 4 553 981
- US-A1- 2011 210 292
- US-A1- 2015 191 351
- US-A1- 2016 115 017

## Beschreibung

Die Erfindung betrifft ein Verfahren zur Herstellung von Ammoniak mit den Merkmalen des Oberbegriffs von Anspruch 1 sowie eine Anlage zur Herstellung von Ammoniak mit den Merkmalen des Oberbegriffs von Anspruch 15.

Die Ammoniaksynthese geht von Wasserstoff sowie Stickstoff als Ausgangsstoffen aus, wobei speziell der Wasserstoff regelmäßig durch Synthesegas bereitgestellt wird, welches Synthesegas insbesondere durch Reformierung aus einem kohlenstoffhaltigen Energieträgerstrom wie z. B. Erdgas gewonnen wurde.

Das Gewinnen des Wasserstoffs auf eine solche Art und Weise bringt es jedoch mit sich, dass das Synthesegas eine Vielzahl von anderen Stoffen aufweist, welche für die Ammoniaksynthese zunächst keine Rolle spielen bzw. sogar für den entsprechenden Katalysator schädlich sind. Zu diesen nicht erwünschten Stoffen zählen u.a. Methan aber auch Argon und Helium, wobei die Kohlenstoffoxide dem Katalysator sogar schaden. Da bei der Ammoniaksynthese das Gasgemisch mit dem Wasserstoff und dem Stickstoff regelmäßig in einem Kreislauf gefahren wird, aus welchem durch Kondensation flüssiger Ammoniak entnommen wird, erfolgt selbst bei einem vollständigen Entfernen der Kohlenstoffoxide grundsätzlich eine Anreicherung der anderen Stoffe in dem Kreislauf, welche Anreicherung der Ammoniaksynthese abträglich ist und welche es erforderlich macht, diese unerwünschten Stoffe ebenfalls im Kreislauf zu fahren. Dies führt insbesondere durch die erforderliche größere Dimensionierung der relevanten Komponenten auch zu einer Erhöhung der mit der Ammoniaksynthese verbundenen Kosten.

Ein Ansatz zur Begrenzung der oben beschriebenen Anreicherung und zur Verringerung der Konzentration der obigen Inertstoffe besteht darin, einen Teil des im Kreislauf gefahrenen Gases auszuschleusen. Sowohl für die Verringerung einer Konzentration der obigen Inertstoffe wie Methan im Kreislauf als auch zum Verhindern eines Verlustes des ausgeschleusten Wasserstoffs und Stickstoffs für die Ammoniaksynthese - was zu einem Sinken der Ammoniakproduktion führen würde - ist dann eine Rückgewinnung von Wasserstoff und/oder Stickstoff aus dem ausgeschleusten Gas erforderlich. Ein solches Ausschleusen und die Rückgewinnen von Wasserstoff und/oder Stickstoff erfordert aber regelmäßig eine Abtrennung und Rückverdichtung des rückgewonnenen Gases, wobei beide Prozessschritte hinsichtlich des apparativen Aufwands, der Energie und damit der Kosten aufwändig sind.

Die DE 10 2015 210 801 A1 wiederum schlägt einen Ansatz vor, welcher ganz ohne ein solches Ausschleusen aus dem Kreislauf der Ammoniaksynthese auskommen soll. Und zwar soll eine Abtrennung von Stoffen wie Methan, Wasser, Argon und/oder von Kohlenstoffoxiden aus dem Gasgemisch mit Wasserstoff und Stickstoff erfolgen, bevor dieses Gasgemisch der Ammoniaksynthese zugeführt wird.

An diesem Ansatz ist wiederum nachteilig, dass zwar entweder eine große Reinheit des Gasgemisches erreicht werden kann, etwa durch das Vorsehen einer Vorrichtung zur Druckwechsel-Adsorption (PSA) zur Reinigung, dies aber zu empfindlichen Verlusten an sich für die Synthese wertvollem Wasserstoff führt. Hinzu kommen Beschränkungen bei der Auslegung der PSA bezüglich der zugeführten Menge an zugeführtem Gas und des Drucks, bei dem sie betrieben wird. Wird andererseits eine Abtrennung eingesetzt, welche zu einer geringeren Reinheit führt, so wird das Problem der Inertstoffe nicht ausreichend abgemildert um eine Ausschleusung im Kreislauf der Ammoniaksynthese vollständig entbehrlich zu machen.

Die US 2015/0191351 A1 aus dem Stand der Technik beschreibt ein Verfahren für die kombinierte Herstellung von Synthesegas für Ammoniak und Kohlenstoffdioxid aus einer Mischung von Kohlenwasserstoffen, wobei die abgekühlte Mischung aus einer Rückumwandlung in einer Adsorptionseinheit durch Druckmodulation getrennt wird, wodurch ein wasserstoffangereicherter Strom mit einem Reinheitsgrad von wenigstens 98 % und ein Restgas erhalten wird.

Die DE 33 08 305 A1 aus dem Stand der Technik beschreibt ein Verfahren zur Erzeugung von Wasserstoff aus Koksofengas, bei welchem das Koksofengas einer Wasserstoffabtrennung in wenigstens einer Druckwechseladsorptionsanlage unterworfen wird. Zur Verbesserung der Wasserstoffausbeute bei wirtschaftlicher Betriebsweise wird vorgeschlagen, dass das Spülgas einer ersten Druckwechseladsorptionsanlage teilweise zur Unterfeuerung der Koksofenbatterie verwendet und teilweise einer zweiten Druckwechseladsorptionsanlage zur Wasserstoffabtrennung zugeführt wird.

Die US 2016/0115017 A1 aus dem Stand der Technik offenbart ein Verfahren zur Herstellung von Ammoniaksynthesegas aus einem kohlenwasserstoffhaltigen Ausgangsmaterial in einem Frontend, umfassend die Schritte der Dampfreformierung des Ausgangsmaterials, wobei ein Synthesegas erhalten wird, das Wasserstoff, Kohlenmonoxid und Kohlendioxid umfasst; eine Behandlung des Synthesegases, einschließlich der Verschiebung von Kohlenmonoxid und der anschließenden Entfernung von Kohlendioxid, wobei die Verschiebung des Synthesegases eine Hochtemperaturverschiebung mit einem Katalysator auf Eisenbasis und bei einer Temperatur von mehr als 300 ° C und dem globalen Dampf umfasst. Das Verhältnis von Kohlenstoff zu Kohlenstoff am vorderen Ende beträgt 2,6 oder weniger. Eine entsprechende Anlage und ein Verfahren zum Umrüsten eines Frontends einer Ammoniakanlage sind ebenfalls offenbart.

Die als nächstkommend angesehene US 2011/0210292 A1 aus dem Stand der Technik beschreibt die Rückgewinnung und die Verarbeitung von Abgas bei einem System und einem Verfahren zum Vergasen. Das System zum Vergasen umfasst einen Vergaser zum Erzeugen von rohem Synthesegas, eine Reinigungseinheit zum Erzeugen eines Syntheseproduktgases und eines Abgases, einen ersten Reformer zum Erzeugen eines ersten reformierten Kohlenwasserstoffs aus einem ersten Teil des Abgases, einen zweiten Reformer zum Erzeugen eines rückgewonnenen rohen Synthesegases aus dem reformierten Kohlenwasserstoff und einem zweiten Teil des Abgases.

Ausgehend von diesem Stand der Technik besteht daher die Aufgabe der Erfindung darin, auch bei der großvolumigen Herstellung von Ammoniak ein für die Ammoniaksynthese geeignetes Gas und insbesondere den Wasserstoff dieses Gases auf wirtschaftlichere Art und Weise bereitzustellen.

Bezogen auf ein Verfahren zur Herstellung von Ammoniak gemäß dem Oberbegriff von Anspruch 1 wird diese Aufgabe durch die Merkmale des kennzeichnenden Teils von Anspruch 1 gelöst. Bezogen auf eine Anlage zur Synthese von Ammoniak gemäß dem Oberbegriff von Anspruch 15 wird diese Aufgabe durch die Merkmale des kennzeichnenden Teils von Anspruch 15 gelöst.

Der Erfindung liegt die Erkenntnis zugrunde, dass bei Verwendung einer Adsorptionsvorrichtung - wie z. B. einer PSA - zum Gewinnen von weitgehend reinem Wasserstoff aus einem Synthesegasstrom der Verlust an Wasserstoff dadurch begrenzt werden kann, dass der Abgasstrom aus der Adsorptionsvorrichtung mit dem Wasserstoff im Abgasstrom einer Rückgewinnungsvorrichtung zugeführt werden kann, aus der der Wasserstoff zumindest teilweise zurückgewonnen wird. Zwar bedeutet dies prinzipiell das Vorsehen einer - gegenüber dem Ansatz aus dem Stand der Technik - zusätzlichen Vorrichtung, doch hat sich herausgestellt, dass dieser Mehraufwand durch den Vorteil der Begrenzung des Wasserstoffverlusts mehr als kompensiert wird.

Die Unteransprüche 2 und 3 beschreiben bevorzugte Ausgestaltungen der Adsorptionsvorrichtung zum Abtrennen des Wasserstoffstroms aus dem Synthesegasstrom, wobei hier insbesondere eine Druckwechsel-Adsorption, aber auch eine Kombination von Druckwechsel- und Temperaturwechsel-Adsorption vorgesehen werden kann.

Der aus der Rückgewinnungsvorrichtung gewonnene Rückgewinnungsstrom kann prozesstechnisch an unterschiedlichen Stellen in den Synthesegasstrom zurückgeführt werden, wobei der Unteranspruch 4 die besonders vorteilhafte Rückführung beschreibt, welche der Adsorptionsvorrichtung prozesstechnisch vorgelagert ist.

Eine Ausgestaltung der Druckwechsel Adsorption, die eine besonders große Wasserstoffausbeute ermöglicht, bei der also eine besonders geringe Menge Wasserstoff mit dem Purgestrom ausgeschleust wird, ist dann möglich, wenn Stickstoff zum Spülen verwendet wird. Dies ist Gegenstand des Unteranspruchs 5. Wie von Unteranspruch 6 beschrieben, ist ggf. beim Spülen in der Adsorptionsvorrichtung verbleibender Stickstoff nicht nur kein Problem für die Ammoniaksynthese, sondern kann sogar als Ausgangsstoff dienen. Dieser Stickstoff kann gemäß dem Gegenstand des Unteranspruchs 7 von einer Luftzerlegungseinheit bereitgestellt werden.

Bezüglich der Ausgestaltung der Rückgewinnungsvorrichtung werden in den Unteransprüchen 8 und 9 verschiedene bevorzugte Varianten beschrieben, wobei der Unteranspruchs 8 eine besonders interessante Lösung mit einer Membrananordnung beschreibt, da sie für die Rückgewinnung des Wasserstoffs auch mit einem stickstoffhaltigen Purgestrom besonders gut geeignet ist. Ein solcher ergibt sich, wenn man in der Adsorptionsvorrichtung mit Stickstoff spült. Folglich wird die besonders verlustarme Kombination von Stickstoffspülung und Wasserstoffrückgewinnung in besonders wirtschaftlicher Weise ermöglicht.

Die Unteransprüche 10 bis 12 beschreiben eine der Adsorptionsvorrichtung vorgelagerte Kohlenstoffdioxidwäsche und deren weitere bevorzugte Ausgestaltung. Insbesondere die Möglichkeit, die Regeneration des in der Kohlenstoffdioxidwäsche verwendeten Absorptionsmediums ohne Erhitzung durchzuführen, bietet einen beachtlichen wirtschaftlichen Vorteil. Diese Erhitzung wird deshalb entbehrlich, weil durch das Vorsehen der nachgelagerten Adsorptionsvorrichtung keine übermäßige Reinheit bei der Kohlenstoffdioxidwäsche erreicht werden muss.

Diese Kohlenstoffdioxidwäsche wird dadurch noch nützlicher, dass - wie im Unteranspruch 13 beschrieben - der Kohlenstoffdioxidwäsche ein Wassergas-Shift vorgelagert wird. Der für die oben beschriebene Regeneration des verwendeten Absorptionsmediums ohne Erhitzung nützliche hohe Druck des Synthesegases wird dadurch gewährleistet, dass das Synthesegas durch eine autotherme Reformierung hergestellt wird.

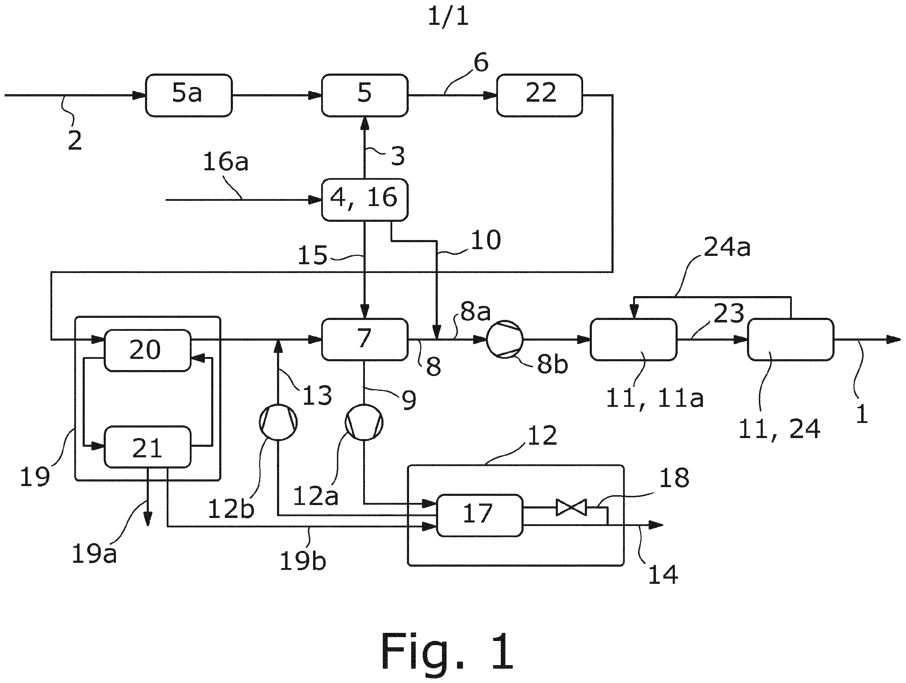

Weitere Einzelheiten, Merkmale, Ausgestaltungen, Ziele und Vorteile der vorliegenden Erfindung werden nachfolgend anhand der lediglich ein Ausführungsbeispiel wiedergebenden Zeichnung erläutert. In der Zeichnung zeigt
- Fig. 1: schematisch das Fließbild einer Anlage zur Ausführung eines Ausführungsbeispiels des vorschlagsgemäßen Verfahrens.

Das vorschlagsgemäße Verfahren dient der Herstellung von Ammoniak 1, wobei diese Herstellung durch Synthese in an sich aus dem Stand der Technik bekannter Weise erfolgt. Speziell wird das vorschlagsgemäße Verfahren durch die in der Fig. 1 dargestellte vorschlagsgemäße Anlage zur Herstellung von Ammoniak 1 ausgeführt.

Die vorschlagsgemäße Anlage weist gemäß der Darstellung der Fig. 1 eine Sauerstoffgewinnungsanordnung 4 zum Bereitstellen eines Sauerstoffstroms 3, eine Synthesegasreaktoranordnung 5 zum Gewinnen eines Synthesegasstroms 6, welcher Wasserstoff und Kohlenstoffoxide aufweist, aus einem kohlenstoffhaltigen Energieträgerstrom 2 und dem Sauerstoffstrom 3 und eine Adsorptionsvorrichtung 7 zum Trennen des Synthesegasstroms 6 in einen Wasserstoff aufweisenden Wasserstoffstrom 8 und in einen Purgestrom 9 auf. Die vorschlagsgemäße Anlage weist ferner eine Ammoniak-Reaktoranordnung 11 zum Umwandeln des Wasserstoffstroms 8 und eines Stickstoffstroms 10 in Ammoniak 1 auf.

Die vorschlagsgemäße Anlage weist eine Rückgewinnungsvorrichtung 12 zum Gewinnen eines wasserstoffhaltigen Rückgewinnungsstroms 13 sowie eines abzuführenden Abgasstroms 14 aus dem Purgestrom 9 auf. Vorschlagsgemäß wird der Wasserstoff des Rückgewinnungsstroms 13 zumindest teilweise der Ammoniak-Reaktoranordnung 11 zur Umwandlung in Ammoniak 1 zugeführt.

Entsprechend zu der vorschlagsgemäßen Anlage wird bei dem vorschlagsgemäßen Verfahren der kohlenstoffhaltige Energieträgerstrom 2 und der Sauerstoffstrom 3 aus der Sauerstoffgewinnungsanordnung 4 der Synthesegasreaktoranordnung 5 zugeführt. Bei dem kohlenstoffhaltigen Energieträgerstrom 2 kann es sich um einen Erdgasstrom umfassend Methan, Wasser, Schwefelwasserstoff, Ethan, Propan und ggf. geringere Anteile von Butan handeln. Ebenso kann es sich um einen Strom von Erdölbegleitgas oder auch um einen Erdölstrom handeln. Der Sauerstoffstrom 3 umfasst Sauerstoff, vorzugweise zu einem molaren Anteil von mindestens 80 %. Ebenso kann es sein, dass der Sauerstoffstrom 3 aus Sauerstoff und Stickstoff besteht oder alternativ im Wesentlichen aus Sauerstoff besteht. Vor der Zuführung zur Synthesegasreaktoranordnung 5 kann auch eine Vorbehandlung des Energieträgerstroms 2 stattfinden, beispielsweise durch Zuführung zu einer - ebenfalls in der Fig. 1 dargestellten - Entschwefelungsvorrichtung 5a oder zu einem - hier nicht dargestellten - Pre-Reforming. Diese sind vorzugsweise ebenfalls von der vorschlagsgemäßen Anlage umfasst.

Bei dem vorschlagsgemäßen Verfahren ist die Synthesegasreaktoranordnung 5 zum Gewinnen des Synthesegasstroms 6 mit Wasserstoff und Kohlenstoffoxiden eingerichtet. Dabei findet in der Synthesegasreaktoranordnung 5 eine Umwandlung der Kohlenwasserstoffe in Wasserstoff und Kohlenstoffoxide - also in Kohlenstoffmonoxid und Kohlenstoffdioxid - in an sich aus dem Stand der Technik bekannter Weise statt.

Weiter wird beim vorschlagsgemäßen Verfahren und entsprechend der Darstellung in der Fig. 1 der Synthesegasstrom 6 der Adsorptionsvorrichtung 7 zum Trennen des Synthesegasstroms 6 in den Wasserstoff aufweisenden Wasserstoffstrom 8 und in den Purgestrom 9 zugeführt. Vor Zuführung zu der Adsorptionsvorrichtung 7 kann der Synthesegasstrom 6 auf verschiedene Art und Weise behandelt werden, was untenstehend ausführlicher beschrieben wird. Ebenso kann es sein, dass der Purgestrom 9 bis auf einen ggf. zugeführten, unten noch näher beschriebenen Spülstrom 15 im Wesentlichen aus den Bestandteilen des Synthesegasstroms 6 abzüglich des Wasserstoffstroms 8 besteht.

Beim vorschlagsgemäßen Verfahren wird der Wasserstoffstrom 8 sowie ein Stickstoffstrom 10 der Ammoniak-Reaktoranordnung 11 zugeführt und dort in Ammoniak 1 umgewandelt. Bezüglich des Stickstoffstroms 10 ist bevorzugt, dass dieser im Wesentlichen aus Stickstoff besteht. Bevorzugt ist weiter, dass gemäß der Darstellung in der Fig. 1 der Wasserstoffstrom 8 mit dem Stickstoffstrom 10 zu einem Speisestrom 8a zusammengeführt wird und dieser Speisestrom 8a einem Speise-Kompressor 8b zum Verdichten des Speisestroms 8a zugeführt wird, bevor der Wasserstoffstrom 8 und der mit ihm zusammengeführte Stickstoffstrom 10 als Speisestrom 8a der Ammoniak-Reaktoranordnung 11 zugeführt werden. Vorzugsweise umfasst die vorschlagsgemäße Anlage den Speise-Kompressor 8b.

Bei dem vorschlagsgemäßen Verfahren wird der Purgestrom 9 der Rückgewinnungsvorrichtung 12 zugeführt, welche aus dem Purgestrom 9 den wasserstoffhaltigen Rückgewinnungsstrom 13 gewinnt sowie den Abgasstrom 14 abführt und es wird der Wasserstoff des Rückgewinnungsstroms 13 zumindest teilweise der Ammoniak-Reaktoranordnung 11 zur Umwandlung in Ammoniak 1 zugeführt. Bevorzugt wird der Wasserstoff des Rückgewinnungsstroms 13 im Wesentlichen vollständig der Ammoniak-Reaktoranordnung 11 zur Umwandlung in Ammoniak 1 zugeführt. Dabei muss der Rückgewinnungsstrom 13 aus der Rückgewinnungsvorrichtung 12 nicht unmittelbar der Ammoniak-Reaktoranordnung 11 zugeführt werden oder unmittelbar mit dem Wasserstoffstrom 8 oder dem Speisestrom 8a zusammengeführt werden. Vielmehr kann die Zuführung des Wasserstoffs des Rückgewinnungsstroms 13 zur Ammoniak-Reaktoranordnung 11 auch indirekt erfolgen, was untenstehend noch genauer beschrieben wird. Ebenso ist grundsätzlich kein erhöhter oder ausschließlicher Anteil an Wasserstoff im Rückgewinnungsstrom 13 gegenüber dem Synthesegasstrom 6 erforderlich, sodass der Rückgewinnungsstrom 13 auch einen molaren Wasserstoffanteil entsprechend dem Synthesegasstrom 6 oder sogar einen geringeren molaren Wasserstoffanteil aufweisen kann.

Das vorschlagsgemäße Verfahren und die vorschlagsgemäße Anlage ist jeweils dadurch gekennzeichnet, dass die Synthesegasreaktoranordnung 5 aus dem Energieträgerstrom 2 den Synthesegasstrom 6 durch eine autotherme Reformierung mit dem Sauerstoffstrom 3 gewinnt, sodass eine katalytische partielle Oxidation die für die endothermen Reformierungsreaktionen erforderliche Wärme bereitstellt. Es handelt sich dabei also um die an sich aus dem Stand der Technik bekannte autotherme Reformierung, welche auch als katalytische partielle Oxidation bezeichnet wird. Hier ist es weiter bevorzugt, dass der Synthesegasstrom 6 aus der Synthesegasreaktoranordnung 5 mit einem Austrittsdruck von mindestens 70 bar, vorzugsweise von 75 bar bis 80 bar austritt. Im vorliegenden Ausführungsbeispiel tritt der Synthesegasstrom 6 mit einem Druck von 72 bar und bei einer Temperatur von 1025° C aus der Synthesegasreaktoranordnung 5 aus. Dabei weist der Synthesegasstrom 6 einen Massenstrom von insgesamt 522.393 kg / h auf und jeweilige molare Anteile von im Wesentlichen 6 % Kohlenstoffdioxid, 16 % Kohlenstoffmonoxid, 44 % Wasserstoff, 1 % Methan, 32 % Wasser sowie weniger als 1 % Stickstoff auf. Dieser hohe Austrittsdruck wird durch einen ursprünglichen Druck des Energieträgerstroms 2 von mehr als 78 bar und der fehlenden Notwendigkeit ermöglicht, für eine - hier nicht erforderliche - Dampfreformierung den Druck zu verringern.

Durch diese autotherme Reformierung werden - insbesondere im Gegensatz zur herkömmlichen Dampfreformierung - höhere Drücke des Synthesegasstroms 6 erreicht, was nicht nur zu einer geringeren oder sogar komplett entbehrlichen Kompressorleistung vor der Ammoniak-Reaktoranordnung 11 führt, sondern auch - wie untenstehend noch beschrieben wird - für die ggf. erforderliche Regeneration bei der Rückgewinnungsvorrichtung 12 von Vorteil ist.

Eine bevorzugte Ausführungsform jeweils des vorschlagsgemäßen Verfahrens und der vorschlagsgemäßen Anlage ist dadurch gekennzeichnet, dass die Adsorptionsvorrichtung 7 eine Vielzahl von Behältern mit einem Adsorbens aufweist. Dabei können die Behälter jeweils abwechselnd in einem von mehreren Phasen betrieben werden. So ist es bevorzugt, dass die Adsorptionsvorrichtung 7 zur Druckwechsel-Adsorption eingerichtet ist und abwechselnd in mindestens einem der Vielzahl von Behältern in einer Adsorptionsphase bei höherem Druck der Synthesegasstrom 6 zum Gewinnen des Wasserstoffstroms 8 geführt wird und aus mindestens einem anderen der Vielzahl von Behältern in einer Spülphase bei niedrigerem Druck der Purgestrom 9 ausgelassen wird. Es handelt sich dabei um das an sich aus dem Stand der Technik bekannte Prinzip einer PSA. Mit anderen Worten werden zu einem beliebigen Zeitpunkt einige der Behälter der Adsorptionsvorrichtung 7 in der Adsorptionsphase betrieben, in welcher der Synthesegasstrom 6 der Adsorption unterzogen wird, während gleichzeitige andere Behälter der Adsorptionsvorrichtung 7 in der Spülphase von den adsorbierten Stoffen gereinigt werden. Indem die Behälter der Adsorptionsvorrichtung 7 in jeweils unterschiedlichen, abwechselnden Phasen betrieben werden, kann sowohl die Adsorption als auch das Spülen insgesamt kontinuierlich erfolgen. Dabei kann es auch weitere Phasen als die beschriebene Adsorptionsphase und Spülphase geben. Bevorzugt ist weiter, dass das Adsorbens einen Molekularsieb zum Trennen von Wasserstoff aufweist. Es kann weiter sein, dass der höhere Druck der Adsorptionsphase durch eine Komprimierung des Synthesegasstroms 6 in der Adsorptionsvorrichtung 7 erreicht wird. Im in der Fig. 1 dargestellten Ausführungsbeispiel gelangt der Synthesegasstrom 6 - einschließlich des Rückgewinnungsstroms 13 - bei einem Druck von im Wesentlichen 65,5 bar und mit einer Temperatur von 20° C zu der Adsorptionsvorrichtung 7 und weist bei einem Massenstrom von insgesamt 105.767 kg / h jeweilige molare Anteile von im Wesentlichen 3 % Kohlenstoffdioxid, 1 % Kohlenstoffmonoxid, 91 % Wasserstoff, 4 % Methan und 1 % Stickstoff auf. Erkennbar ist der Anteil des Wasserstoffs bereits vor Zuführung zur Adsorptionsvorrichtung 7 sehr hoch, was zu deren Entlastung führt. Die für die Änderung der Zusammensetzung des Synthesegasstroms 6 wesentlichen Vorgänge werden untenstehend näher beschrieben. Der Wasserstoffstrom 8 aus der Adsorptionsvorrichtung 7 weist dann einen Massenstrom von insgesamt 41,175 kg / h bei 43° C auf und einem Druck von 64,9 bar und besteht im Wesentlichen vollständig aus Wasserstoff.

Eine weitere bevorzugte Ausführungsform jeweils des vorschlagsgemäßen Verfahrens und der vorschlagsgemäßen Anlage ist dadurch gekennzeichnet, dass die Adsorptionsvorrichtung 7 zur Temperaturwechsel-Adsorption eingerichtet ist und abwechselnd in mindestens einem der Vielzahl von Behältern in einer Adsorptionsphase bei niedrigerer Temperatur der Synthesegasstrom 6 zum Gewinnen des Wasserstoffstroms 8 geführt wird und aus mindestens einem anderen der Vielzahl von Behältern in einer Spülphase bei höherer Temperatur der Purgestrom 9 ausgelassen wird. Hier handelt es sich um das ebenfalls prinzipiell aus dem Stand der Technik bekannte Prinzip einer Temperaturwechsel-Adsorption (TSA). Diese Funktionsweise gemäß der Temperaturwechsel-Adsorption kann auch mit der oben beschriebenen Druckwechsel-Adsorption kombiniert werden. Hier kann es sein, dass die höhere Temperatur durch einen Wärmeaustausch mit einem wärmeren Fluid und/oder die niedrigere Temperatur durch einen Wärmeaustausch mit einen kälteren Fluid erreicht wird.

Gemäß einer bevorzugten Ausführungsform jeweils des vorschlagsgemäßen Verfahrens und der vorschlagsgemäßen Vorrichtung ist vorgesehen, dass der Rückgewinnungsstrom 13 der Adsorptionsvorrichtung 7 prozesstechnisch vorgelagert dem Synthesegasstrom 6 zugeführt wird. Dieser Sachverhalt ist auch in der Fig. 1 dargestellt. Jedenfalls ein Teil des Wasserstoffs im Rückgewinnungsstrom 13 gelangt dann in den Wasserstoffstrom 8 und mit diesem weiter zur Ammoniak-Reaktoranordnung 11. Diese vorgelagerte Zuführung ermöglicht es weiter, dass keine besonderen Anforderungen an die Reinheit des Rückgewinnungsstroms 13 gestellt werden müssen, da Verunreinigungen und Inerte beim abermaligen Durchlaufen der Adsorptionsvorrichtung 7 abgetrennt werden. Diese Freiheit wiederum kann entscheidend für die Auswahl und die Wirtschaftlichkeit des eingesetzten Rückgewinnungsverfahrens sein. Es kann aber auch sein, dass der Rückgewinnungsstrom 13 der Adsorptionsvorrichtung 7 prozesstechnisch nachgelagert dem Wasserstoffstrom 8, ggf. mit dem Stickstoffstrom 10, zugeführt wird. Mit anderen Worten durchläuft dann weder der Rückgewinnungsstrom 13 noch Wasserstoff aus dem Rückgewinnungsstrom 13 die Adsorptionsvorrichtung 7 bevor er der Ammoniak-Reaktoranordnung 11 zugeführt wird.

Der Rückgewinnungsstrom 13 weist im vorliegenden Ausführungsbeispiel einen Massenstrom von insgesamt 20.800 kg / h bei einer Temperatur von 40 ° C und einem Druck von 72 bar auf. Die jeweiligen molaren Anteile des Rückgewinnungsstroms 13 sind im Wesentlichen 10 % Kohlenstoffdioxid, 3 % Kohlenstoffmonoxid, 66 % Wasserstoff und 4 % Stickstoff. Im Vergleich dazu weist der Purgestrom 9 einen Massenstrom von insgesamt 63.592 kg / h bei einer Temperatur von 40 ° C und einem Druck von 1,5 bar mit einem jeweiligen molaren Anteil von im Wesentlichen 19 % Kohlenstoffdioxid, 7 % Kohlenstoffmonoxid, 36 % Wasserstoff, 28 % Methan sowie 10 % Stickstoff auf. Wie untenstehend noch beschrieben wird, kann der Rückgewinnungsvorrichtung 12 nicht nur der Purgestrom 9 zugeführt werden, sondern es können ihr auch andere Gasströme zugeführt werden.

Wie bereits festgestellt, durchläuft in dem dargestellten Fall der der Adsorptionsvorrichtung 7 vorgelagerten Rückführung der Rückgewinnungsstrom 13 mit dem entsprechenden Wasserstoff auch wieder die Adsorptionsvorrichtung 7. Ebenso kann es sein, dass der Rückgewinnungsstrom 13 der Adsorptionsvorrichtung insbesondere direkt zugeführt 7 und auf diese Weise rezykliert wird. Auch dies führt zu einem Durchlaufen der Adsorptionsvorrichtung 7 durch den Rückgewinnungsstrom 13 mit dem entsprechenden Wasserstoff, jedoch ohne Zwischenschritt der Zuführung zum Synthesegasstrom 6.

Schließlich kann es auch sein, dass aus der Rückgewinnungsvorrichtung 12 mehr als ein Rückgewinnungsstrom 13 - also eine Vielzahl von Rückgewinnungsströmen - gewonnen wird, wobei dann für jeden dieser Rückgewinnungsströme 13 unabhängig voneinander eine der oben beschriebenen Möglichkeiten besteht, den Wasserstoff des jeweiligen Rückgewinnungsstroms 13 zumindest teilweise der Ammoniak-Reaktoranordnung 11 zur Umwandlung in Ammoniak 1 zuzuführen.

Eine bevorzugte Ausführungsform jeweils des vorschlagsgemäßen Verfahrens und der vorschlagsgemäßen Anlage ist dadurch gekennzeichnet, dass zum Gewinnen des Purgestroms 9 ein stickstoffhaltiger, vorzugsweise im Wesentlichen aus Stickstoff bestehender, Spülstrom 15 der Adsorptionsvorrichtung 7 zugeführt wird. Gegenüber einem herkömmlichen, im Wesentlichen aus Wasserstoff bestehenden Spülstrom hat dies den Vorteil, dass die Verluste an Wasserstoff durch den Spülvorgang deutlich verringert werden. Hier kann es insbesondere sein, dass dem mindestens einem anderen der Vielzahl von Behältern in der Spülphase der Spülstrom 15 zum Ausspülen des Purgestroms 9 zugeführt wird. Während der größte Teil des eingesetzten Spülstroms 15 die Adsorptionsvorrichtung 7 mit dem Purgestrom 9 verlässt, verbleibt ein geringerer Teil nach dem Spülvorgang in der Adsorptionsvorrichtung 7 und verlässt sie mit dem Wasserstoffstrom 8.

Mithin enthält der Wasserstoffstrom 8 einen geringen Anteil an Stickstoff, der aber für die nachgeschaltete Ammoniak-Reaktoranordnung 11 nicht störend ist und sondern sogar wünschenswert ist, da er den zuzusetzenden Stickstoffstrom 10 verringert.

Entsprechend ist es bezüglich des Wasserstoffstroms bevorzugt, dass er einen molaren Anteil von mindestens 90 % Wasserstoff und vorzugsweise von mindestens 95 % Wasserstoff aufweist. Er kann auch einen molaren Anteil von mindestens 99 % Wasserstoff aufweisen. Ebenso kann es sein, dass der Wasserstoffstrom 8 im Wesentlichen aus Wasserstoff und aus vom Spülstrom 15 in der Adsorptionsvorrichtung 7 verbliebenem Stickstoff besteht. Alternativ kann es aber auch sein, dass der Wasserstoffstrom 8 im Wesentlichen aus Wasserstoff besteht.

Der Purgestrom 9 entspricht bei einem stickstoffhaltigen Spülstrom 15 in seiner Zusammensetzung dem um die Menge des im Wasserstoffstrom 8 verbleibenden Stickstoffs reduzierten Spülstrom 15 mit dem aus der Adsorptionsvorrichtung 7 ausgespülten Stoff, welcher Stoff wiederum dem Synthesegasstroms 6 abzüglich des Wasserstoffstroms 8 und ggf. einem direkt der Adsorptionsvorrichtung 7 zugeführten Rückgewinnungsstrom 13 - wie oben beschrieben - entspricht.

Grundsätzlich kann der Stickstoff dieses Spülstroms 15 einer beliebigen Quelle entstammen. Bevorzugt ist, dass der Spülstrom 15 aus einer Luftzerlegungseinheit 16 zum Gewinnen von Stickstoff und Sauerstoff aus einer Umgebungsluft 16a gewonnen und der Adsorptionsvorrichtung 7 zugeführt wird. Vorzugsweise umfasst die vorschlagsgemäße Anlage diese Luftzerlegungseinheit 16. Eine solche Luftzerlegungseinheit 16 kann mehrere Stoffströme für das vorschlagsgemäße Verfahren und für die vorschlagsgemäße Anlage bereitstellen. So ist es weiter bevorzugt, dass der Stickstoffstrom 10 von der Luftzerlegungseinheit 16 bereitgestellt wird. In diesem Fall ist es bevorzugt, dass der Spülstrom 15 einen niedrigeren Druck als der Stickstoffstrom 10 aufweist. Ferner ist es bevorzugt, dass die Sauerstoffgewinnungsanordnung 4 die Luftzerlegungseinheit 16 umfasst oder aus ihr besteht. In diesem Fall wird auch der Sauerstoffstrom 3 von der Luftzerlegungseinheit 16 bereitgestellt.

Eine weitere bevorzugte Ausführungsform, welche in der Fig.1 dargestellt ist, ist dadurch gekennzeichnet, dass die Rückgewinnungsvorrichtung 12 eine Membranvorrichtung 17 zum Abtrennen des Rückgewinnungsstroms 13 aus dem Purgestrom 9 aufweist, wodurch der Abgasstrom 14 verbleibt. Mit anderen Worten führt das Abtrennen des Rückgewinnungsstroms 13 durch die Membranvorrichtung 17 dazu, dass der Rest des Purgestroms 9 zum Abgasstrom 14 wird. Wie ebenfalls in der Fig. 1 dargestellt ist es hier weiter bevorzugt, dass ein Teil des Abgasstroms 14 als Membranspülstrom 18 zum Ausspülen des Rückgewinnungsstroms 13 verwendet wird. Wie ebenfalls in der Fig. 1 dargestellt, kann ein prozesstechnisch der Rückgewinnungsvorrichtung 12 vorgelagerter Purgegas-Kompressor 12a, welcher vorzugsweise von der vorschlagsgemäßen Anlage umfasst ist, zum Komprimieren des Purgegases 9 sowie ein prozesstechnisch der Rückgewinnungsvorrichtung 12 nachgelagerter Rückgewinnungs-Kompressor 12b, welcher vorzugsweise ebenfalls von der vorschlagsgemäßen Anlage umfasst ist, zum Komprimieren des Rückgewinnungsstroms 13 verwendet werden.

Eine solche Membranvorrichtung 17 ist besonders gut dazu geeignet, mit einem im Wesentlichen aus Stickstoff bestehenden Spülstrom 15 für die Adsorptionsvorrichtung 7 kombiniert zu werden, da eine solche Membranvorrichtung 17 problemlos mit hohen Stickstoffanteilen im Purgestrom 9 betrieben werden kann.

Es gibt auch Alternativen zu einer Rückgewinnungsvorrichtung 12 mit einer Membranvorrichtung 17. Gemäß einer bevorzugten, hier nicht dargestellten Ausführungsform ist vorgesehen, dass die Rückgewinnungsvorrichtung 12 eine weitere Adsorptionsvorrichtung aufweist, welche zum Trennen des Purgestroms 9 in den Rückgewinnungsstrom 13 und den Abgasstrom 14 eingerichtet ist. Es handelt sich also gewissermaßen um eine sequenzielle Anordnung von Adsorptionsvorrichtungen und insbesondere PSAs. Entsprechend ist vorzugsweise diese weitere Adsorptionsvorrichtung zur Druckwechsel-Adsorption und/oder zur Temperaturwechsel-Adsorption eingerichtet. Im Vergleich mit der Adsorptionsvorrichtung 7 kann es sein, dass eine Vielzahl von Behältern der weiteren Adsorptionsvorrichtung jeweils in der Adsorptionsphase und in der Spülphase bei niedrigerem Druck betrieben werden als die Vielzahl von Behältern der Adsorptionsvorrichtung 7 jeweils in der Adsorptionsphase und in der Spülphase.

Gemäß einer bevorzugten Ausführungsform jeweils des vorschlagsgemäßen Verfahrens und der vorschlagsgemäßen Anlage ist vorgesehen, dass der Synthesegasstrom 6 einer Kohlenstoffdioxidwäsche 19 zum Auswaschen mindestens eines Teiles des Kohlenstoffdioxids aus dem Synthesegasstrom 6 zugeführt wird. Vorzugsweise ist diese Kohlenstoffdioxidwäsche 19, welche ebenso als Vorrichtung zur Kohlenstoffdioxidwäsche bezeichnet werden kann, von der vorschlagsgemäßen Anlage umfasst. Grundsätzlich kann in dieser Kohlenstoffdioxidwäsche 19 auf beliebige Art und Weise mindestens ein Teil des Kohlenstoffdioxids aus dem Synthesegasstrom 6 ausgewaschen werden. Bevorzugt ist jedoch, dass in der Kohlenstoffdioxidwäsche 19 das Kohlenstoffdioxid durch ein Methanol umfassendes Waschmedium ausgewaschen wird. Ebenso ist es bevorzugt, dass das Kohlenstoffdioxid im Wesentlichen vollständig durch die Kohlenstoffdioxidwäsche 19 aus dem Synthesegasstrom 6 ausgewaschen wird. Vorzugsweise gibt die Kohlenstoffdioxidwäsche 19 einen kohlenstoffdioxidhaltigen Strom 19a ab, welcher vorzugsweise im Wesentlichen das ausgewaschene Kohlenstoffdioxid aufweist.

Hier ist es ebenso bevorzugt, dass der Synthesegasstrom 6 einer Absorptionsstufe 20 der Kohlenstoffdioxidwäsche 19 zur Aufnahme des Kohlenstoffdioxids in das Waschmedium zugeführt wird und dass das Waschmedium in der Absorptionsstufe 20 sowie in einer Regenerationsstufe 21 der Kohlenstoffdioxidwäsche 19 zum Freisetzen von Kohlenstoffdioxid aus dem Waschmedium in einem Kreislauf gefahren wird. Die Funktionsweise einer solchen Wäschervorrichtung ist an sich aus dem Stand der Technik bekannt.

Besonders vorteilhaft ist es, wenn das Waschmedium kaltes Methanol umfasst und auf diese Weise in einem sogenannten Kaltmethanol-Kreislauf geführt wird, was auch als "cold methanol loop" bezeichnet wird. Entsprechend ist es bevorzugt, dass eine Temperatur des Waschmediums in der Kohlenstoffdioxidwäsche durchgehend weniger als -10 ° C beträgt. Dabei werden in der Regenerationsstufe 21 regelmäßig noch tiefere Temperaturen erreicht, so etwa zwischen -60° C und -80° C. Weiter kann es sein, dass die Temperatur des Waschmediums in der Kohlenstoffdioxidwäsche durchgehend weniger als -20° C oder sogar weniger als -30° C beträgt. Die entsprechenden Druckverhältnisse des Waschmediums werden untenstehend beschrieben.

Bevorzugt ist hier vorgesehen, dass das Kohlenstoffdioxid aus dem Waschmedium in der Regenerationsstufe 21 im Wesentlichen durch Druckentspannung des Waschmediums freigesetzt wird. So kann der kohlenstoffdioxidhaltige Strom 19a gewonnen werden. Insbesondere ist es bevorzugt, dass das Kohlenstoffdioxid aus dem Waschmedium in der Regenerationsstufe 21 erhitzungsfrei freigesetzt wird. Auf diese Weise entfällt eine Erhitzung zwecks Regeneration, für welche Erhitzung üblicherweise ein aufwendiger separater Anlagenteil - als Heißregenerator bezeichnet - vorgesehen werden muss. Dies wiederum verringert den apparativen Aufwand und den Energiebedarf der Kohlenstoffdioxidwäsche 19, was kennzeichnend für den Ansatz des Kaltmethanol-Kreislaufs ist. Nach erfolgter erhitzungsfreier Freisetzung des Kohlenstoffdioxids aus dem Waschmedium kann demgegenüber durchaus eine Erwärmung des Kohlenstoffdioxids erfolgen, so etwa auf einen Temperaturbereich zwischen 0° C und 20° C durch einen Wärmeaustausch mit abzukühlendem heißen Synthesegas.

Vorteilhaft für den Einsatz einer solchen Regeneration praktisch ausschließlich durch Druckentspannung sind geringe Anforderungen an den zu erzielenden Restgehalt - molarer Anteil - an Kohlenstoffdioxid im der Adsorptionsvorrichtung 7 zugeführten Synthesegasstrom 6, welcher molare Anteil im Bereich zwischen 0,2% und 3%, vorzugsweise zwischen 1% und 2% liegt. Vorliegend ist gemäß Fig. 1 der Kohlenstoffdioxidwäsche 19 eine Adsorptionsvorrichtung 7 zur Druckwechsel-Adsorption und damit zur Entfernung von Kohlenstoffoxiden, Methan und anderen Inerten nachgeschaltet, sodass das nach der Kohlenstoffdioxidwäsche 19 im Synthesegasstrom 6 verbleibende, restliche Kohlenstoffdioxid dort effektiv entfernt wird.

Eine solche Regeneration im Wesentlichen durch Druckentspannung ist insbesondere dann besonders gut möglich, wenn der Synthesegasstrom 6 mit einem möglichst hohen Druck durch die Kohlenstoffdioxidwäsche 19 geführt wird. Wie oben bereits beschrieben wurde, erlaubt es das Vorsehen einer autothermen Reformierung in der Synthesegasreaktoranordnung 5, den Synthesegasstrom 6 mit einem Austrittdruck von mindestens 70 bar bereitzustellen.

Weiter ist es in diesem Zusammenhang bevorzugt, dass das Waschmedium bei der Kreislaufzufuhr von der Regenerationsstufe 21 zur Absorptionsstufe 20 auf einen höheren Druck gepumpt wird. Dies entspricht dem zur oben beschriebenen Druckentspannung entgegengesetzten Vorgang.

Die bei der Druckentspannung erfolgende drastische Abkühlung des Waschmediums ist ein gewünschter und kennzeichnender Effekt des Kaltmethanol-Kreislaufs. Sie führt dazu, dass das regenerierte und zurückgeführte Waschmedium das Kohlenstoffdioxid äußerst effizient wieder aufnehmen kann, so dass die Kohlendioxidwäsche insgesamt sehr kompakt ausfallen und die benötigte Menge an Waschmedium sehr klein sein kann.

Im vorliegenden Ausführungsbeispiel der Fig. 1 weist der der Kohlenstoffdioxidwäsche 19 und speziell der Absorptionsstufe 20 zugeführte Synthesegasstrom 6 mit einem Massenstrom von 407.780 kg / h bei einer Temperatur von 40° C und einem Druck von 67,5 bar einen jeweiligen molaren Anteil von im Wesentlichen 26 % Kohlenstoffdioxid, 1 % Kohlenstoffmonoxid, 70 % Wasserstoff, 2 % Methan und 1 % Stickstoff auf. Entsprechend ist es bevorzugt, dass der Synthesegasstrom 6 der Kohlenstoffdioxidwäsche 19 mit einem Druck von jeweils mindestens 30 bar, von mindestens 40 bar, von mindestens 50 bar, von mindestens 60 bar oder von mindestens 65 bar zugeführt wird. Dabei entspricht der Druck des Waschmediums in der Absorptionsstufe 20 im Wesentlichen dem oben beschriebenen Druck des Synthesegasstroms 6 in der Kohlenstoffdioxidwäsche 19. In der Regenerationsstufe 21 kann der Druck des Waschmediums im Wesentlichen bis auf Atmosphärendruck oder sogar bis auf ein Vakuum absinken.

Bevorzugt ist, dass in Übereinstimmung mit dem in der Fig. 1 dargestellten Ausführungsbeispiel, dass die Abgabe des Kohlenstoffdioxids in der Regenerationsstufe 21 mehrstufig erfolgt, sodass die Kohlenstoffdioxidwäsche 19 - und speziell die Regenerationsstufe 21 - einen kohlenstoffdioxidhaltigen Strom 19a sowie einen wasserstoffhaltigen Strom 19b abgibt, wobei vorzugsweise der wasserstoffhaltige Strom 19b im Wesentlichen ausgewaschenen Wasserstoff aufweist. Dieser Sachverhalt lässt sich auch dadurch ausdrücken, dass ein molarer Kohlenstoffdioxidanteil des kohtenstoffdioxidhaltigen Stroms 19a größer ist als derjenige des wasserstoffhaltigen Stroms 19b. Ebenso lässt sich feststellen, dass ein molarer Wasserstoffanteil des wasserstoffhaltigen Stroms 19b größer ist als derjenige des kohlenstoffdioxidhaltigen Stroms 19a.

Bei einem Auswaschen von Kohlenstoffdioxid werden regelmäßig auch andere Bestandteile des gewaschenen Gasstroms, so etwa auch Wasserstoff, mit ausgewaschen. Die verschiedenen ausgewaschenen Gase werden aber bei der obigen Druckentspannung des Waschmediums hauptsächlich bei unterschiedlichen Druckentspannungsstufen freigesetzt. Folglich kann, wie im Ausführungsbeispiel gemäß der Fig. 1, die Kohlenstoffdioxidwäsche 19 den wasserstoffhaltigen Strom 19b durch eine erste Druckentspannung des Waschmediums in der Regenerationsstufe 21 und den kohlenstoffdioxidhaltigen Strom 19a durch eine zweite Druckentspannung des Waschmediums in der Regenerationsstufe 21 abgeben. Gemäß dem vorliegenden Ausführungsbeispiel weist der kohlenstoffdioxidhaltige Strom 19a einen Massenstrom von 305.372 kg / h bei einer Temperatur von 40 ° C und einem Druck von 1,5 bar sowie einen molaren Anteil von 99 % Kohlenstoffdioxid auf. Der wasserstoffhaltige Strom 19b hingegen, welcher der oben beschriebenen Rückgewinnungsvorrichtung 12 zugeführt wird, weist einen Massenstrom von 14.654 kg / h bei einer Temperatur von 45 ° C und einem Druck von 7 bar auf. Der wasserstoffhaltige Strom 19b weist ferner einen molaren Anteil von im Wesentlichen 60 % Kohlenstoffdioxid, 1 % Kohlenstoffmonoxid, 31 % Wasserstoff, 6 % Methan sowie 2 % Argon auf. Erkennbar ist also der Anteil an Wasserstoff nicht unerheblich, welcher dann also durch Zuführung zur Rückgewinnungsvorrichtung 12 genutzt werden kann.

Eine bevorzugte Ausführungsform jeweils des vorschlagsgemäßen Verfahrens und der vorschlagsgemäßen Anlage ist dadurch gekennzeichnet, dass der Synthesegasstrom 6 einer Shiftvorrichtung 22 zugeführt wird, dass der der Shiftvorrichtung 22 zugeführte Synthesegasstrom 6 Wasser aufweist und dass in der Shiftvorrichtung 22 eine Wassergas-Shift-Reaktion zur Umsetzung zumindest eines Teils des Kohlenstoffmonoxids des Synthesegasstroms 6 mit dem Wasser in Kohlenstoffdioxid und Wasserstoff stattfindet. Vorzugsweise ist die Shiftvorrichtung 22 von der vorschlagsgemäßen Anlage umfasst. Bevorzugt erfolgt diese Zuführung zur Shiftvorrichtung 22 der Kohlenstoffdioxidwäsche 19 prozesstechnisch vorgelagert, was so auch in der Fig. 1 dargestellt ist. Das Wasser im Synthesegasstrom 6 kann einerseits bereits im Energieträgerstrom 2 vorhanden sein. Es kann andererseits auch in einer - hier nicht dargestellten - Sättigung dem Synthesegasstrom 6 zugeführt werden, Für die Ammoniaksynthese ist aus dem Energieträgerstrom 2 nur Wasserstoff - neben dem ggf. vorhandenen Stickstoff - interessant, sodass die Kohlenstoffoxide im Synthesegasstrom 6 vorteilhafterweise möglichst weitgehend bereits vor Zuführung zur Adsorptionsvorrichtung 7 aus diesem entfernt werden können. Durch die in der Shiftvorrichtung 22 durchgeführte Wassergas-Shift-Reaktion wird einerseits zusätzlich wertvoller Wasserstoff gewonnen und anderseits Kohlenstoffdioxid auf Kosten von Kohlenstoffmonoxid gewonnen. Durch die Kombination mit der obigen Kohlenstoffdioxidwäsche 19 wird also zuerst in der Shiftvorrichtung 22 - unter dem Gewinn von Wasserstoff - die Zusammensetzung der Kohlenstoffoxide im Synthesegasstrom 6 zugunsten des Kohlenstoffdioxids gegenüber dem Kohlenstoffmonoxid verschoben und dann das Kohlenstoffdioxid im Wesentlichen vollständig ausgewaschen. Im Ergebnis weist der der Adsorptionsvorrichtung 7 zugeführte Synthesegasstrom 6 nur noch einen geringen Anteil an Kohlenstoffoxiden auf, sodass die Belastung der Adsorptionsvorrichtung 7 gering ausfällt. Neben der in der Fig. 1 dargestellten Shiftvorrichtung 22 und der Kohlenstoffdioxidwäsche 19 kann der Synthesegasstrom 6 zwischen der Synthesegasreaktoranordnung 5 und der Adsorptionsvorrichtung 7 weitere, hier nicht gesondert dargestellte oder beschriebene Prozessstufen durchlaufen, und zwar insbesondere solche zur Änderung der Temperatur oder des Wasser- bzw. Wasserdampfgehalts.

Im Ausführungsbeispiel der Fig. 1 weist der der Shiftvorrichtung 22 zugeführte Synthesegasstrom 6 einen Massenstrom von 522.393 kg / h bei einer Temperatur von 320° Celsius und einem Druck von 71,5 bar auf. Der Synthesegasstrom 6 weist einen molaren Anteil von im Wesentlichen 6 % Kohlenstoffdioxid, 16 % Kohlenstoffmonoxid, 44 % Wasserstoff, 1 % Methan, 1 % Stickstoff und 32 % Wasser. Der aus der Shiftvorrichtung 22 gewonnene Synthesegasstrom 6 - welcher also der obigen Wassergas-Shift-Reaktion bereits unterzogen wurde - weist dann einen Massenstrom von 522.397 kg / h bei einer Temperatur von 355° C und einem Druck von 69 bar auf. Hinsichtlich seiner Zusammensetzung weist er einen molaren Anteil von nun im Wesentlichen 21 % Kohlenstoffdioxid, 1 % Kohlenstoffmonoxid, 58 % Wasserstoff, 2 % Methan, 1 % Stickstoff sowie 18 % Wasser auf. Der Anteil an Wasserstoff ist also erkennbar um 14 Prozentpunkt und damit mehr als 25 % Prozent angestiegen, wohingegen die Kohlenstoffoxide im Synthesegasstrom 6 nun fast ausschließlich aus Kohlenstoffdioxid bestehen.

Gemäß der Darstellung in der Fig. 1 kann es gemäß einer bevorzugten Ausführungsform jeweils des vorschlagsgemäßen Verfahrens und der vorschlagsgemäßen Anlage sein, dass die Ammoniak-Reaktoranordnung 11 einen Reaktorstufe 11a für die Ammoniaksynthese sowie eine prozesstechnisch der Reaktorstufe 11a nachgelagerte Kondensationsstufe 24 zum Abtrennen von Ammoniak 1 aus Restgas 24a aufweist. Dann wird der in der Reaktorstufe 11 synthetisierte Ammoniak 1 zunächst als Rohammoniakstrom 23 aus der Reaktorstufe 11a geführt und der Kondensationsstufe 24 zugeführt, aus welcher das Ammoniak 1 durch Auskondensation gewonnen wird. Ein verbliebenes Restgas 24a wird gemäß der Darstellung in der Fig. 1 aus der Kondensationsstufe 24 zu der Reaktorstufe 11a rezykliert. Hier ist es weiter bevorzugt, dass eine Kühlung der Kondensationsstufe 24 mit der Kohlenstoffdioxidwäsche 19 zur Kühlung des Waschmediums auf eine in der Fig. 1 nicht dargestellte Art und Weise gekoppelt ist.

Vorstehend beschriebene bevorzugte Ausgestaltungen des vorschlagsgemäßen Verfahrens entsprechen bevorzugten Ausgestaltungen der vorschlagsgemäßen Anlage und umgekehrt.

## Patentansprüche

1. Verfahren zur Herstellung von Ammoniak (1), wobei ein kohlenstoffhaltiger Energieträgerstrom (2) und ein Sauerstoffstrom (3) aus einer Sauerstoffgewinnungsanordnung (4) einer Synthesegasreaktoranordnung (5) zum Gewinnen eines Synthesegasstroms (6) mit Wasserstoff und Kohlenstoffoxiden zugeführt wird, wobei der Synthesegasstrom (6) einer Adsorptionsvorrichtung (7) zum Trennen des Synthesegasstroms (6) In einen Wasserstoff aufweisenden Wasserstoffstrom (8) und in einen Purgestrom (9) zugeführt wird, wobei der Wasserstoffstrom (8) sowie ein Stickstoffstrom (10) einer Ammoniak-Reaktoranordnung (11) zugeführt und dort In Ammoniak (1) umgewandelt wird wobei der Purgestrom (9) einer Rückgewinnungsvorrichtung (12) zugeführt wird, welche aus dem Purgestrom (9) einen wasserstoffhaltlgen Rückgewinnungsstrom (13) gewinnt sowie einen Abgasstrom (14) abführt und wobei der Wasserstoff des Rückgewinnungsstroms (13) zumindest teilweise der Ammoniak-Reaktoranordnung (11) zur Umwandlung in Ammoniak (1) zugeführt wird, **dadurch gekennzeichnet, dass** die Synthesegasreaktoranordnung (5) aus dem Energieträgerstrom (2) den Synthesegasstrom (6) durch eine autotherme Reformierung mit dem Sauerstoffstrom (3) gewinnt, sodass eine katalytische partielle Oxidation die für die endothermen Reformierungsreaktionen erforderliche Wärme bereitstellt.

2. Verfahren nach Anspruch 1, **dadurch gekennzeichnet, dass** die Adsorptionsvorrichtung (7) eine Vielzahl von Behältern mit einem Adsorbens aufweist, vorzugsweise, dass die Adsorptionsvorrichtung zur Druckwechsel-Adsorption eingerichtet Ist und abwechselnd in mindestens einem der Vielzahl von Behältern in einer Adsorptionsphase bei höherem Druck der Synthesegasstrom (6) zum Gewinnen des Wasserstoffstroms (8) geführt wird und aus mindestens einem anderen der Vielzahl von Behältern In einer Spülphase bei niedrigerem Druck der Purgestrom (9) ausgelassen wird, insbesondere, dass das Adsorbens einen Molekularsieb zum Trennen von Wasserstoff aufweist.

3. Verfahren nach Anspruch 2, **dadurch gekennzeichnet, dass** die Adsorptionsvorrichtung (7) zur Temperaturwechsel-Adsorption eingerichtet ist und abwechselnd in mindestens einem der Vielzahl von Behältern In einer Adsorptionsphase bel niedrigerer Temperatur der Synthesegasstrom (6) zum Gewinnen des Wasserstoffstroms (8) geführt wird und aus mindestens einem anderen der Vielzahl von Behältern in einer Spülphase bei höherer Temperatur der Purgestrom (9) ausgelassen wird.

4. Verfahren nach einem der Ansprüche 1 bis 3, **dadurch gekennzeichnet, dass** der Rückgewinnungsstrom (13) der Adsorptionsvorrichtung (7) prozesstechnisch vorgelagert dem Synthesegasstrom (6) zugeführt wird.

5. Verfahren nach einem der Ansprüche 1 bis 4, **dadurch gekennzeichnet, dass** zum Gewinnen des Purgestroms (9) ein stickstoffhaltiger, vorzugsweise im Wesentlichen aus Stickstoff bestehender, Spülstrom (15) der Adsorptionsvorrichtung (7) zugeführt wird, insbesondere, dass dem mindestens einen anderen der Vielzahl von Behältern in der Spülphase der Spülstrom zum Ausspülen des Purgestroms (9) zugeführt wird.

6. Verfahren nach einem der Ansprüche 1 bis 5, **dadurch gekennzeichnet, dass** der Wasserstoffstrom (8) einen molaren Anteil von mindestens 90 % Wasserstoff, vorzugsweise von mindestens 95 % Wasserstoff aufweist, insbesondere, dass der Wasserstoffstrom (8) im Wesentlichen aus Wasserstoff und aus vom Spülstrom (15) in der Adsorptionsvorrichtung (7) verbliebenem Stickstoff besteht.

7. Verfahren nach Anspruch 5 oder 6, **dadurch gekennzeichnet, dass** der Spülstrom (15) aus einer Luftzerlegungseinheit (16) zum Gewinnen von Stickstoff und Sauerstoff aus einer Umgebungsluft (16a) gewonnen und der Adsorptionsvorrichtung (7) zugeführt wird, vorzugsweise, dass der Stickstoffstrom (10) von der Luftzerlegungselnhelt (16) bereitgestellt wird, Insbesondere, dass die Sauerstoffgewinnungsanordnung (4) die Luftzerlegungseinheit (16) umfasst.

8. Verfahren nach einem der Ansprüche 1 bis 7, **dadurch gekennzeichnet, dass** die Rückgewlnnungsvorrichtung (12) eine Membranvorrichtung (17) zum Abtrennen des Rückgewinnungsstroms (13) aus dem Purgestrom (9) aufweist, wodurch der Abgasstrom (14) verbleibt, vorzugsweise, dass ein Teil des Abgasstroms (14) als Membranspülstrom (18) zum Ausspülen des Rückgewinnungsstroms (13) verwendet wird.

9. Verfahren nach einem der Ansprüche 1 bis 8, **dadurch gekennzeichnet**, die Rückgewinnungsvorrichtung (12) eine weitere Adsorptionsvorrichtung aufweist, welche zum Trennen des Purgestroms (9) in den Rückgewinnungsstrom (13) und den Abgasstrom (14) eingerichtet ist, vorzugsweise, dass die weitere Adsorptionsvorrichtung zur Druckwechsel-Adsorption und/oder zur Temperaturwechsel-Adsorption eingerichtet Ist, insbesondere, dass eine Vielzahl von Behältern der weiteren Adsorptionsvorrichtung jeweils in der Adsorptionsphase und in der Spülphase bei niedrigerem Druck betrieben werden als die Vielzahl von Behältern der Adsorptionsvorrichtung jeweils in der Adsorptionsphase und in der Spülphase.

10. Verfahren nach einem der Ansprüche 1 bis 9 **dadurch gekennzeichnet, dass** der Synthesegasstrom (6) einer Kohlenstoffdioxidwäsche (19) zum Auswaschen mindestens eines Teiles des Kohlenstoffdioxids aus dem Synthesegasstrom (6) zugeführt wird, vorzugsweise, dass In der Kohlenstoffdioxidwäsche (19) das Kohlenstoffdioxid durch ein Methanol umfassendes Waschmedium ausgewaschen wird.

11. Verfahren nach Anspruch 10, **dadurch gekennzeichnet, dass** der Synthesegasstrom (6) einer Absorptionsstufe (20) der Kohlenstoffdioxidwäsche (19) zur Aufnahme des Kohlenstoffdioxids In das Waschmedium zugeführt wird und dass das Waschmedium in der Absorptionsstufe (20) sowie in einer Regenerationsstufe (21) der Kohlenstoffdioxidwäsche (19) zum Freisetzen von Kohlenstoffdioxid aus dem Waschmedium in einem Kreislauf gefahren wird.

12. Verfahren nach Anspruch 11, **dadurch gekennzeichnet, dass** das Kohlenstoffdioxid aus dem Waschmedium in der Regenerationsstufe (21) im Wesentlichen durch Druckentspannung des Waschmediums freigesetzt wird, vorzugsweise, dass das Kohlenstoffdioxid aus dem Waschmedium In der Regenerationsstufe (21) erhitzungsfrei freigesetzt wird, insbesondere, dass das Waschmedium bei der Kreislaufzufuhr von der Regenerationsstufe (21) zur Absorptionsstufe (20) auf einen höheren Druck gepumpt wird.

13. Verfahren nach einem der Ansprüche 1 bis 12, **dadurch gekennzeichnet, dass** der Synthesegasstrom (6), vorzugsweise der Kohlenstoffdioxidwäsche (19) prozesstechnisch vorgelagert, einer Shiftvorrichtung (22) zugeführt wird, dass der der Shiftvorrichtung (22) zugeführte Synthesegasstrom (6) Wasser aufweist und dass in der Shiftvorrichtung (22) eine Wassergas-Shift-Reaktion zur Umsetzung zumindest eines Teils des Kohlenstoffmonoxids des Synthesegasstroms (6) mit dem Wasser In Kohlenstoffdioxid und Wasserstoff stattfindet.

14. Verfahren nach einem der Ansprüche 1 bis 13, **dadurch gekennzeichnet, dass** der Synthesegasstrom (6) aus der Synthesegasreaktoranordnung (5) mit einem Austrittsdruck von mindestens 70 bar, vorzugsweise von 75 bar bis 80 bar austritt.

15. Anlage zur Herstellung von Ammoniak (1) mit einer Sauerstoffgewinnungsanordnung (4) zum Bereitstellen eines Sauerstoffstroms (3), einer Synthesegasreaktoranordnung (5) zum Gewinnen eines Synthesegasstroms (6) mit Wasserstoff und Kohlenstoffoxiden aus einem kohlenstoffhaltigen Energieträgerstrom (2) und dem Sauerstoffstrom (3), einer Adsorptionsvorrichtung (7) zum Trennen des Synthesegasstroms (6) In einen Wasserstoff aufweisenden Wasserstoffstrom (8) und in einen Purgestrom (9), einer Ammoniak-Reaktoranordnung (11) zum Umwandeln des Wasserstoffstroms (8) und eines Stickstoffstroms (10) In Ammoniak (1) und einer Rückgewinnungsvorrichtung (12) zum Gewinnen eines wasserstoffhaltigen Rückgewinnungsstrom (13) sowie eines abzuführenden Abgasstroms (14) aus dem Purgestrom (9), wobei der Wasserstoff des Rückgewinnungsstroms (13) zumindest teilweise der Ammoniak-Reaktoranordnung (11) zum Umwandlung In Ammoniak (1) zugeführt wird, **dadurch gekennzeichnet, dass** die Synthesegasreaktoranordnung (5) aus dem Energieträgerstrom (2) den Synthesegasstrom (6) durch eine autotherme Reformierung mit dem Sauerstoffstrom (3) gewinnt, sodass eine katalytlsche partielle Oxidation die für die endothermen Reformierungsreaktionen erforderliche Wärme bereitstellt.

## Claims

1. A method for producing ammonia (1), wherein a carbon-containing energy carrier flow (2) and an oxygen flow (3) from an oxygen-producing assembly (4) are fed to a synthesis gas reactor assembly (5) for obtaining a synthesis gas flow (6) with hydrogen and carbon oxides, wherein the synthesis gas flow (6) is fed to an adsorption device (7) for separating the synthesis gas flow (6) into a hydrogen flow (8), which comprises hydrogen, and a purge flow (9), and wherein the hydrogen flow (8) and a nitrogen flow (10) are fed to an ammonia reactor assembly (11) and converted into ammonia (1) there, wherein the purge flow (9) is fed to a recovery device (12) which recovers a hydrogen-containing recovery flow (13) from the purge flow (9) and discharges a waste gas flow (14) therefrom, and wherein the hydrogen of the recovery flow (13) is at least partly fed to the ammonia reactor assembly (11) for conversion into ammonia (1), **characterized in that** the synthesis gas reactor assembly (5) obtains the synthesis gas flow (6) from the energy carrier flow (2) by autothermic reforming with the oxygen flow (3), so that a catalytic partial oxidation provides the heat required for the endothermic reforming reactions.

2. The method according to claim 1, **characterized in that** the adsorption device (7) includes a plurality of containers with an absorbing agent, preferably, that the adsorption device is configured for pressure swing adsorption and, alternately, the synthesis gas flow (6) is conducted in at least one of the plurality of the containers in an adsorption phase at higher pressure for producing the hydrogen flow (8) and the purge flow (9) is let out from at least one other from the plurality of the containers in a rinsing phase at lower pressure, particularly, that the adsorbing agent has a molecular sieve for separating hydrogen.

3. The method according to claim 2, **characterized in that** the adsorption device (7) is configured for temperature swing adsorption and, alternately, the synthesis gas flow (6) is conducted in at least one of the plurality of the containers in an adsorption phase at a lower temperature for obtaining the hydrogen flow (8) and the purge flow (9) is let out from at least one other of the plurality of the containers in a rinsing phase at a higher temperature.

4. The method according to any one of the claims 1 to 3, **characterized in that** the recovery flow (13) is fed to the synthesis gas flow (6) upstream of the adsorption device (7) with respect to the process.

5. The method according to any one of the claims 1 to 4, **characterized in that**, for obtaining the purge flow (9), a nitrogen-containing rinsing flow (15), which preferably consists substantially of nitrogen, is fed to the adsorption device (7), in particular, that the rinsing flow is fed to the at least one other of the plurality of containers in the rinsing phase in order to rinse the purge flow (9).

6. The method according to any one of the claims 1 to 5, **characterized in that** the hydrogen flow (8) has a molar fraction of at least 90% hydrogen, preferably of at least 95% hydrogen, in particular, that the hydrogen flow (8) consists substantially of hydrogen and nitrogen remaining in the adsorption device (7) from the rinsing flow (15).

7. The method according to claim 5 or 6, **characterized in that** the rinsing flow (15) is obtained from an air separation unit (16) for obtaining nitrogen and oxygen from ambient air (16a) and fed to the adsorption device (7), preferably, that the nitrogen flow (10) is provided by the air separation unit (16), particularly, that the oxygen-producing assembly (4) comprises the air separation unit (16).

8. The method according to any one of the claims 1 to 7, **characterized in that** the recovery device (12) includes a membrane device (17) for separating the recovery flow (13) from the purge flow (9), so that the waste gas flow (14) remains, preferably, that a part of the waste gas flow (14) is used as a membrane rinsing flow (18) for rinsing the recovery flow (13).

9. The method according to any one of the claims 1 to 8, **characterized in that** the recovery device (12) comprises a further adsorption device configured for separating the purge flow (9) into the recovery flow (13) and the waste gas flow (14), preferably, that the further adsorption device is configured for pressure swing adsorption and/or temperature swing adsorption, particularly, that a plurality of containers of the further adsorption device, in each case in the adsorption phase and in the rinsing phase, are operated at a lower pressure than the plurality of containers of the adsorption device, in each case in the adsorption phase and in the rinsing phase.

10. The method according to any one of the claims 1 to 9, **characterized in that** the synthesis gas flow (6) is fed to a carbon dioxide scrubbing unit (19) for washing out at least a part of the carbon dioxide from the synthesis gas flow (6), preferably, that the carbon dioxide is washed out in the carbon dioxide scrubbing unit (19) by a scrubbing medium comprising methanol.

11. The method according to claim 10, **characterized in that** the synthesis gas flow (6) is fed to an absorption stage (20) of the carbon dioxide scrubbing unit (19) for absorbing the carbon dioxide into the scrubbing medium, and that the scrubbing medium is run through a loop in the absorption stage (20) and in a regeneration stage (21) of the carbon dioxide scrubbing unit (19) for releasing carbon dioxide from the scrubbing medium.

12. The method according to claim 11, **characterized in that** the carbon dioxide from the scrubbing medium is released in the regeneration stage (21) substantially by a pressure relief of the scrubbing medium, preferably, that the carbon dioxide is released from the scrubbing medium in the regeneration stage (21) without heating, particularly, that the scrubbing medium is pumped to a higher pressure in the loop feed from the regeneration stage (21) to the absorption stage (20).

13. The method according to any one of the claims 1 to 12, **characterized in that** the synthesis gas flow (6) is fed, preferably upstream of the carbon dioxide scrubbing unit (19) with respect to the process, to a shift device (22), that the synthesis gas flow (6) fed to the shift device (22) includes water, and that a water-gas shift reaction for converting at least a part of the carbon monoxide of the synthesis gas flow (6) with the water into carbon dioxide and hydrogen takes place in the shift device (22).

14. The method according to any one of the claims 1 to 13, **characterized in that** the synthesis gas flow (6) exits the synthesis gas reactor assembly (5) with a discharge pressure of at least 70 bars, preferably of 75 bars to 80 bars.

15. A system for producing ammonia (1), comprising an oxygen-producing assembly (4) for providing an oxygen flow (3), a synthesis gas reactor assembly (5) for obtaining a synthesis gas flow (6) with hydrogen and carbon oxides from a carbon-containing energy carrier flow (2) and the oxygen flow (3), an adsorption device (7) for separating the synthesis gas flow (6) into a hydrogen flow (8), which comprises hydrogen, and a purge flow (9), and an ammonia reactor assembly (11) for converting the hydrogen flow (8) and a nitrogen flow (10) into ammonia (1), and a recovery device (12) for obtaining from the purge flow (9) a hydrogen-containing recovery flow (13) and a waste gas flow (14) to be discharged, wherein the hydrogen of the recovery flow (13) is at least partly fed to the ammonia reactor assembly (11) for conversion into ammonia (11), **characterized in that** the synthesis gas reactor assembly (5) obtains the synthesis gas flow (6) from the energy carrier flow (2) by autothermic reforming with the oxygen flow (3), so that a catalytic partial oxidation provides the heat required for the endothermic reforming reactions.

## Revendications

1. Procédé, destiné à produire de l'ammoniac (1), un flux de vecteur énergétique (2) et un flux d'oxygène (3) provenant d'un ensemble de récupération d'oxygène (4) étant alimenté vers un ensemble de réacteur à gaz de synthèse (5), pour obtenir un flux de gaz de synthèse (6) comprenant de l'hydrogène et des oxydes de carbone, le flux de gaz de synthèse (6) étant alimenté vers un dispositif d'adsorption (7), destiné à séparer le flux de gaz de synthèse (6) en un flux d'hydrogène (8) comportant de l'hydrogène et en un flux de purge (9), le flux d'hydrogène (8) ainsi qu'un flux d'azote (10) étant alimentés vers un ensemble de réacteur à ammoniac (11) et y étant transformés en ammoniac (1), le flux de purge (9) étant alimenté vers un dispositif de récupération (12), lequel récupère à partir du flux de purge (9) un flux de récupération (13) contenant de l'hydrogène, et en évacue un flux d'effluents gazeux (14) et l'hydrogène du flux de récupération (13) étant alimenté au moins partiellement vers l'ensemble de réacteur à ammoniac (11), pour être transformé en ammoniac (1), **caractérisé en ce que** l'ensemble de réacteur à gaz de synthèse (5) récupère à partir du flux de vecteur énergétique (2) le flux de gaz de synthèse (6) par un reformage autothermique avec le flux d'oxygène (3), de sorte qu'une oxydation catalytique partielle mette à disposition la chaleur nécessaire pour les réactions de reformage endothermique.

2. Procédé selon la revendication 1, **caractérisé en ce que** le dispositif d'adsorption (7) comporte une pluralité de réservoirs comprenant un adsorbant, de préférence **en ce que** le dispositif d'adsorption est aménagé pour une adsorption à variation de pression et en alternance, le flux de gaz de synthèse (6) est conduit à pression élevée dans au moins l'un de la pluralité de réservoirs, dans une phase d'adsorption, pour récupérer le flux d'hydrogène (8) et le flux de purge (9) sort sous une pression réduite d'au moins un autre de la pluralité de réservoirs dans une phase de rinçage, notamment **en ce que** l'adsorbant comporte un tamis moléculaire pour la séparation d'hydrogène.

3. Procédé selon la revendication 2, **caractérisé en ce que** le dispositif d'adsorption (7) est aménagé pour une adsorption à variation de température, et en alternance, le flux de gaz de synthèse (6) est conduit à température réduite dans au moins l'un de la pluralité de réservoirs dans une phase d'adsorption, pour récupérer le flux d'hydrogène (8) et le flux de purge (9) sort sous une température élevée d'au moins un autre de la pluralité de réservoirs dans une phase de rinçage.

4. Procédé selon l'une quelconque des revendications 1 à 3, **caractérisé en ce que** selon la technique du processus, le flux de récupération (13) du dispositif d'adsorption (7) est alimenté en amont du flux de gaz de synthèse (6).

5. Procédé selon l'une quelconque des revendications 1 à 4, **caractérisé en ce que** pour récupérer le flux de purge (9), un flux de rinçage (15) contenant de l'azote, de préférence majoritairement constitué d'azote est alimenté vers le dispositif d'adsorption (7) notamment **en ce que** pour le rinçage, pendant la phase de rinçage, le flux de purge (9) est alimenté vers l'au moins un autre de la pluralité de réservoirs.

6. Procédé selon l'une quelconque des revendications 1 à 5, **caractérisé en ce que** le flux d'hydrogène (8) comporte une fraction moléculaire d'au moins 90 % d'hydrogène, de préférence d'au moins 95 % d'hydrogène, notamment **en ce que** le flux d'hydrogène (8) est majoritairement constitué d'hydrogène et d'azote résiduel provenant du flux de rinçage (15) dans le dispositif d'adsorption (7).

7. Procédé selon la revendication 5 ou 6, **caractérisé en ce que** le flux de rinçage (15) est récupéré à partir d'une unité de séparation d'air (16), destinée à récupérer de l'azote et de l'oxygène à partir d'un air ambiant (16a) et alimenté vers le dispositif d'adsorption (7), de préférence **en ce que** le flux d'azote (10) est mis à disposition par l'unité de séparation d'air (16) notamment **en ce que** l'ensemble de récupération d'oxygène (4) comprend l'unité de séparation d'air (16).

8. Procédé selon l'une quelconque des revendications 1 à 7, **caractérisé en ce que** le dispositif de récupération (12) comporte un dispositif à membrane (17), destiné à séparer le flux de récupération (13) hors du flux de purge (9), suite à quoi, il reste le flux d'effluents gazeux (14), de préférence **en ce qu'**une partie du flux d'effluents gazeux (14) est utilisée comme flux de rinçage de membrane (18), pour en rincer le flux de récupération (13).

9. Procédé selon l'une quelconque des revendications 1 à 8, **caractérisé en ce que** le dispositif de récupération (12) comporte un dispositif d'adsorption supplémentaire, lequel est aménagé pour séparer le flux de purge (9) en le flux de récupération (13) et le flux d'effluents gazeux (14), de préférence **en ce que** le dispositif d'adsorption supplémentaire est aménagé pour 1'adsorption par variation de pression et/ou pour 1'adsorption par variation de température, notamment **en ce qu'**une pluralité de réservoirs du dispositif d'adsorption supplémentaire est exploitée dans la phase d'adsorption et dans la phase de rinçage sous une pression plus réduite que celle des réservoirs du dispositif d'adsorption dans la phase d'adsorption et dans la phase de rinçage.

10. Procédé selon l'une quelconque des revendications 1 à 9, **caractérisé en ce que** le flux de gaz de synthèse (6) est alimenté vers un lavage de dioxyde de carbone (19) pour le lavage d'au moins une partie du dioxyde de carbone hors du flux de gaz de synthèse (6), de préférence **en ce que** dans le lavage de dioxyde de carbone (19), le dioxyde de carbone est lavé par un fluide de lavage comprenant du méthanol.

11. Procédé selon la revendication 10, **caractérisé en ce que** le flux de gaz de synthèse (6) est alimenté vers une étape d'absorption (20) du lavage de dioxyde de carbone (19), destinée à absorber le dioxyde de carbone dans le fluide de lavage et **en ce que** le fluide de lavage est conduit dans un circuit dans l'étape d'absorption (20), ainsi que dans une étape de régénération (21) du lavage de dioxyde de carbone, pour libérer du dioxyde de carbone (19) à partir du fluide de lavage.

12. Procédé selon la revendication 11, **caractérisé en ce que** dans l'étape de régénération (21), le dioxyde de carbone est libéré hors du fluide de lavage, majoritairement par dépressurisation du fluide de lavage, de préférence **en ce que** dans l'étape de régénération (21), le dioxyde de carbone est libéré sans chauffage hors du fluide de lavage, notamment **en ce que** lors de l'alimentation vers le circuit, le fluide de lavage est pompé à une pression élevée de l'étape de régénération (21) vers l'étape d'absorption (20).

13. Procédé selon l'une quelconque des revendications 1 à 12, **caractérisé en ce que** selon la technique du processus, de préférence en amont du lavage du dioxyde de carbone (19), le flux de gaz de synthèse (6) est alimenté vers un dispositif de conversion (22), **en ce que** le flux de gaz de synthèse (6) alimenté vers le dispositif de conversion (22) comporte de l'eau et **en ce que** dans le dispositif de conversion (22) a lieu une réaction de conversion de gaz à l'eau, pour la transformation d'au moins une partie du monoxyde de carbone du flux de gaz de synthèse (6) avec l'eau en dioxyde de carbone et hydrogène.

14. Procédé selon l'une quelconque des revendications 1 à 13, **caractérisé en ce que** le flux de gaz de synthèse (6) sort de l'ensemble de réacteur à gaz de synthèse (5) à une pression de sortie d'au moins 70 bar, de préférence de 75 bar à 80 bar.

15. Ligne de production d'ammoniac (1), pourvue d'un ensemble de récupération d'oxygène (4), destiné à mettre à disposition un flux d'oxygène (3), d'un ensemble de réacteur à gaz de synthèse (5), destiné à récupérer un flux de gaz de synthèse (6), comprenant de l'hydrogène et des oxydes de carbone à partir d'un flux de vecteur énergétique (2) contenant du carbone et du flux d'oxygène (3), d'un dispositif d'adsorption (7), destiné à séparer le flux de gaz de synthèse (6) en un flux d'hydrogène (8) comportant de l'hydrogène et en un flux de purge (9), d'un ensemble de réacteur à ammoniac (11), destiné à transformer le flux d'hydrogène (8) et un flux d'azote (10) en ammoniac (1) et d'un dispositif de récupération (12), destiné à récupérer un flux de récupération (13) contenant de l'hydrogène, ainsi qu'un flux d'effluents gazeux (14) qui doit être évacué hors du flux de purge (9), l'hydrogène du flux de récupération (13) étant alimenté au moins en partie vers l'ensemble de réacteur à ammoniac (11), pour la transformation en ammoniac (1), **caractérisé en ce que** l'ensemble de réacteur à gaz de synthèse (5) récupère à partir du flux de vecteur énergétique (2) le flux de gaz de synthèse (6) par une reformage autothermique avec le flux d'oxygène (3), de sorte qu'une oxydation catalytique partielle mette à disposition la chaleur nécessaire pour les réactions de reformage endothermique.
